# EUROPEAN PATENT SPECIFICATION

(11) **EP 3 324 389 B1**
(45) Date of publication and mention of the grant of the patent: **30.12.2020**
(21) Application number: 17202861.5
(22) Date of filing: 21.11.2017
(51) Int. Cl.: G09G 3/20

(54) **DISPLAY DEVICE WITH LENS FILM AND DISPLAY METHOD**
ANZEIGEVORRICHTUNG MIT LINSENFOLIE UND ANZEIGEVERFAHREN
AFFICHEUR AVEC FILM À LENTILLE ET PROCÉDÉ D'AFFICHAGE

(30) Priority: 22.11.2016 CN 201611050262
(43) Date of publication of application: 23.05.2018
(73) Proprietor: Beijing Xiaomi Mobile Software Co., Ltd., Beijing 100085 (CN)
(72) Inventor: LI, Guosheng, Beijing, 100085 (CN)
(74) Representative: Kudlek, Franz Thomas

(56) References cited:
- JP-A- H10 197 844
- US-A- 5 933 228
- US-A1- 2009 167 846
- US-A1- 2010 265 435
- US-A1- 2010 309 204
- US-A1- 2011 018 860
- US-A1- 2015 138 457

## Description

### TECHNICAL FIELD

The present disclosure relates to the technical field of image display, and more particularly, to a display device, a lens film and a display method.

### BACKGROUND

A display screen is one of the most common input and output devices for electronic equipment. The display screen has a capability of displaying texts, images and videos.

Currently, the display screen usually has a wide visible angle approximately in a range of 120° to 170°. When a user uses electronic equipment in a densely populated place such as a bus and a subway, it is probable that other persons around the user may catch sight of the contents on the display screen, resulting in privacy leakage for the user.
US 2011/018860 A1, US 2015/138457 A1, and US 2010/309204 A1 each disclose a display device, comprising: a controller, a display driver connected to the controller, a display panel connected to the display driver, and a lens film disposed over the display panel, wherein the lens film comprises a plurality of lenses arranged in parallel, each of the lenses having a respective refractive index; the controller is configured to send an image frame to the display driver; and the display driver is configured to drive the display panel to display the image frame on a plurality of display areas arranged in parallel and spaced at intervals, each of the display areas being configured to display a respective part of display contents of the image frame; and the respective display contents displayed on each of the display areas are emitted to a predetermined visible range after being refracted by a corresponding lens.

### SUMMARY

In order to solve the problem that when the display screen is a wide visible angle display screen, it is probable that other persons around the user may catch sight of the contents on the display screen, resulting in privacy leakage for the user, embodiments of the present disclosure provide a display device, a lens film and a display method, the display device having a narrower visible angle. Technical solutions are as follows.

According to a first aspect of the present invention, a display device according to claim 1 is provided.

Optionally, the display driver is further configured to drive an idle area between any two adjacent display areas on the display panel to be in a non-operating state.

Optionally, the display driver is further configured to drive an idle area between any two adjacent display areas on the display panel to display predetermined pseudo display contents, and the pseudo display contents are emitted to an area outside the predetermined visible range after being refracted by a corresponding lens at a predetermined refractive index.

According to a second aspect of the present invention, a display method according to claim 5 is provided.

The technical solutions provided by the embodiments of the present disclosure may have the following advantageous effects.

With the controller configured to send an image frame to the display driver, and the display driver configured to drive the display panel to display the image frame on a plurality of display areas arranged in parallel and spaced at intervals, each of the display areas being configured to display a respective part of display contents of the image frame, wherein the respective display contents displayed on each of the display areas are emitted to a predetermined visible range after being refracted by a corresponding lens. In this way, it may solve the problem in the related art that when the display screen displays with a wide visible angle, it is probably that other persons around the user may catch sight of the contents on the display screen, resulting in privacy leakage for the user, and may achieve the effect that the visible range of the display panel is limited within a predetermined visible range and a person in an area outside the predetermined visible range cannot see or cannot clearly see the image frame on the display panel.

Also, the plurality of lenses are arranged in parallel, the bottom surface of each of the lenses is a flat surface and the top surface is a semi-cylindrical surface; and each of the lenses has a respective refractive index and is configured to refract the light from the bottom surface and then emit the refracted light from the top surface to a predetermined visible range. When the lens film is detachably affixed onto an upper layer of the display panel, the visible range of the display panel may be limited within a predetermined visible range (i.e., at this time, the operating mode of the display device is a narrow visible angle operating mode). When the lens film is detached from the upper layer of the display panel, the visible range of the display panel is switched to a normal visible range (i.e., at this time, the operating mode of the display device is a wide visible angle operating mode), thereby achieving the effect of meeting various display demands for users in different application scenarios.

It should be understood that both the foregoing general description and the following detailed description are exemplary and explanatory only and are not restrictive of the disclosure.

The present invention is defined by the appended claims. Hence, when the word "embodiment" is used in the description, it should be interpreted as meaning an embodiment of the invention only when the combination of its respective features has a scope included within the scope of the appended claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a block diagram illustrating a display device according to an exemplary embodiment.
Fig. 2 is a schematic structural diagram of a lens film 20 according to an exemplary embodiment.
Fig. 3 is a schematic diagram illustrating a lens film 20 affixed onto an upper layer of a display panel 144 according to an exemplary embodiment.
Figs. 4A to 4C are schematic diagrams illustrating operation of the display device according to the embodiment as shown in Fig. 1.
Fig. 4D is a schematic diagram illustrating an effect when an image frame is displayed on the display device according to the embodiment as shown in Fig. 1.
Fig. 5 is a schematic diagram illustrating the display device according to the embodiment as shown in Fig. 1.
Fig. 6 is a flow chart illustrating a display method according to an exemplary embodiment.
Fig. 7 is a flow chart illustrating a display method according to another exemplary embodiment.
Fig. 8 is a flow chart illustrating a display method according to still another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the disclosure. Instead, they are merely examples of apparatuses and methods consistent with aspects related to the disclosure as recited in the appended claims.

The embodiments of the present disclosure are intended to provide a display device, a lens film and a display method, the display device having a narrower visible angle. Optionally, the display device has a wide visible angle mode and a narrow visible angle mode and can switch between the two modes. Here, the display device may be any electronic equipment having a display screen, such as a mobile phone, a tablet.

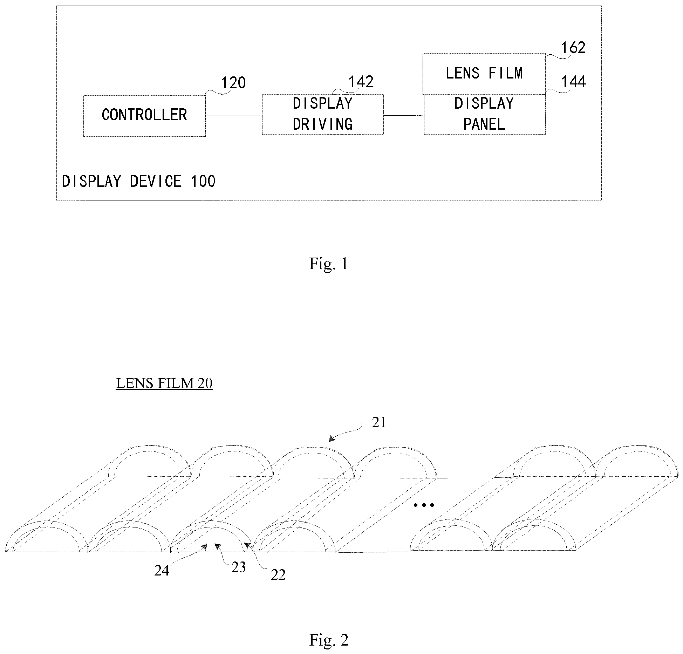

Fig. 1 is a block diagram illustrating a display device 100 according to an exemplary embodiment.

As illustrated in Fig. 1, the display device 100 includes: a controller 120, a display driver 142 connected to the controller 120, a display panel 144 connected to the display driver 142, and a lens film 162 disposed over the display panel 144. The lens film 162 includes a plurality of lenses 163 arranged in parallel, each of the lenses 163 having a respective refractive index.

The controller 120 may be a processor or a graphics processor. The controller 120 has a capability of outputting an image frame and sending a control instruction.

The display driver 142 includes a driving circuit and is configured to drive the display panel 144 to perform a display. The display panel 144 may be a liquid crystal display (LCD) panel or an organic light-emitting display (OLED) panel. Optionally, when the display panel 144 is a LCD panel, the display device 100 also includes a backlight source below the LCD panel.

Fig. 2 is a schematic structural diagram of a lens film 20 according to an exemplary embodiment.

As illustrated in Fig. 2, the lens film 20 includes a plurality of lenses 21 arranged in parallel. The bottom surface of each of the lenses 21 is a flat surface and the top surface thereof is a semi-cylindrical surface. Optionally, the bottom surface of the lens 21 is a rectangle, the length of the longer side of the rectangle is equal to the length of the display panel 144 and the length of the shorter side of the rectangle is 1/N of the width of the display panel 144, where N is the number of the lenses 21. The longer sides of the rectangles of any two adjacent lenses 21 are overlapped. The top surface of the lens 21 is a semi-cylindrical surface in a broad sense. It may be a semi-cylindrical surface in a strict sense, or an arc surface, as a portion of a semi-cylindrical surface in a strict sense, having a radian smaller than that of a semi-cylindrical surface.

Each of the lenses 21 has a respective refractive index and is configured to refract light from the bottom surface and then emit the refracted light from the top surface to a predetermined visible range. Optionally, the predetermined visible range is defined right above the lens film 20, and the width of the predetermined visible range is an empirical value of the width between human eyes.

Optionally, each of the lenses 21 includes a lens shell 22 and filling material 23. The lens shell 22 is configured to form the bottom surface and the top surface of the lens 21, and the lens shell 22 has a cavity 24 between the bottom surface and the top surface. The filling material 23 is configured to be filled in the cavity 24 and the filling material 23 has a refractive index corresponding to that of the lens 21.

Optionally, each of the lenses 21 has a respective refractive index. Some of the lenses 21 have refractive indexes different from each other, and each of the lenses 21 has a refractive index depending on the position of the lens 21 on the lens film 20.

Optionally, the lens shell 22 is made of plastic or organic glass materials, and the filling material 23 is made of gas, liquid or solid having a predetermined refractive index.

The structure of the lens film 20 in Fig. 2 is a schematic structure, and in practice, the lens film 20 may be designed as thin film material, which is similar to a protective film for a mobile phone screen and is affixed to the upper layer of the display panel 144 by adhesive. That is, the lens film 20 may be produced and sold as a component separately from the display device.

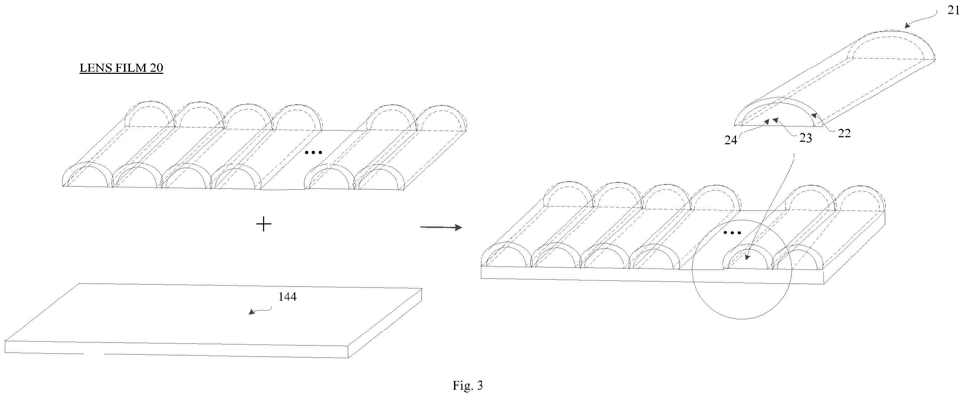

Referring to Fig. 3, schematically, the lens film 20 may be detachably affixed onto the upper layer of the display panel 144.

It should be noted that the size and scale of the lens film 20 and the display panel 144 is exemplary only and can be modified according to actual needs, which is not limited in this embodiment.

Accordingly from the above, in the lens film of the present embodiment, a plurality of lenses are arranged in parallel, the bottom surface of each of the lenses is a flat surface and the top surface is a semi-cylindrical surface; and each of the lenses has a respective refractive index and is configured to refract the light from the bottom surface and then emit the refracted light from the top surface to a predetermined visible range. When the lens film is detachably affixed onto an upper layer of the display panel, the visible range of the display panel may be limited within a predetermined visible range (i.e., at this time, the operating mode of the display device is a narrow visible angle operating mode). When the lens film is detached from the upper layer of the display panel, the visible range of the display panel is switched to a normal visible range (i.e., at this time, the operating mode of the display device is a wide visible angle operating mode), thereby achieving the effect of meeting various display demands for users in different application scenarios.

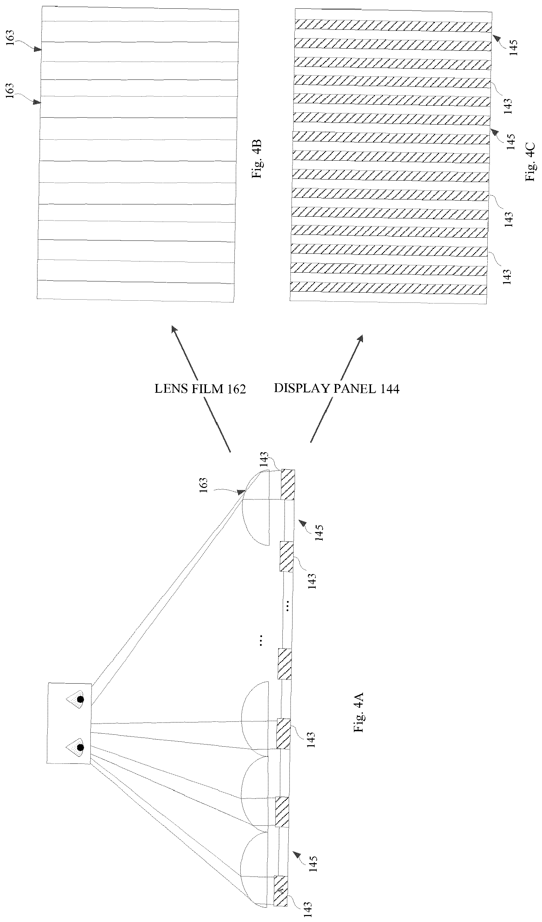

On the basis of the embodiment illustrated in Fig. 1, referring to Figs. 4A to 4C, which illustrate schematic diagrams of operation when the display panel 144 and the lens film 162 are in the narrow visible angle operating state. Fig. 4A is a schematic side view of the display panel 144 and the lens film 162. The lens film 162 is positioned over the display panel 144. Fig. 4B is a schematic front view of the lens film 162; and Fig. 4C is a schematic front view of the display panel 144.

In the narrow visible angle operating state, the controller 120 sends an image frame to the display driver 142.

The display driver 142 is configured to drive the display panel 144 to display the image frame on a plurality of display areas 143 arranged in parallel and spaced at intervals. Each of the display areas 143 is configured to display a respective part of display contents of the image frame. Optionally, if the number of the display areas is N, each of the display areas is configured to display 1/N of the image frame, and the sizes of the display contents displayed on each of the display areas are the same or different from each other. The union of the display contents displayed on all of the display areas 143 is identical to the whole image frame.

In other words, the image frame is divided into a plurality of elongated display contents, the number of the elongated display contents is equal to that of the display areas, and each of the plurality of elongated display contents is displayed on respective one of the display areas 143. Each of the display areas 143 is an elongated and rectangular display area. An idle area 145 between any two adjacent display areas 143 docs not display any contcnt.

In an embodiment, the length of each of the display areas 143 is the same and the width of each of the display areas 143 is the same. For example, the length of each of the display areas 143 is 1,080 pixels and the width of each of the display areas 143 is 5 pixels. Also, the width of each of the idle areas 145 between any two adjacent display areas 143 may be the same. For example, the width of each of the idle areas 145 is 3 pixels. In another embodiment, at least two of the display areas 143 have the same length, but have different widths. For example, the width of the display area 143 at the central area of the display panel 144 is larger than the width of the display area 143 at the outer area of the display panel 144. At least two of the idle areas 145 have the same length, but have different widths. For example, the width of the idle area 145 at the central area of the display panel 144 is larger than the width of the idle area 145 at the outer area of the display panel 144. This is not limited in this embodiment of the present disclosure.

The lens film 162 includes a plurality of lenses 163 arranged in parallel, each of the lenses 163 having a respective refractive index.

In an embodiment, the length of each of the lenses 163 is the same and the width of each of the lenses 163 is the same. For example, the length of each of the lenses 163 is 1,080 pixels and the width of each of the lenses 163 is 5 pixels. In another embodiment, at least two of the lenses 163 have the same length, but have different widths. For example, the width of the lens 163 at the central area of the lens film 162 is larger than the width of the lens 163 at the outer area of the lens film 162. This is not limited in this embodiment of the present disclosure.

Each of the display areas 143 corresponds to a respective lens 163, i.e., the display areas 143 and the lenses 163 have a one-to-one correspondence.

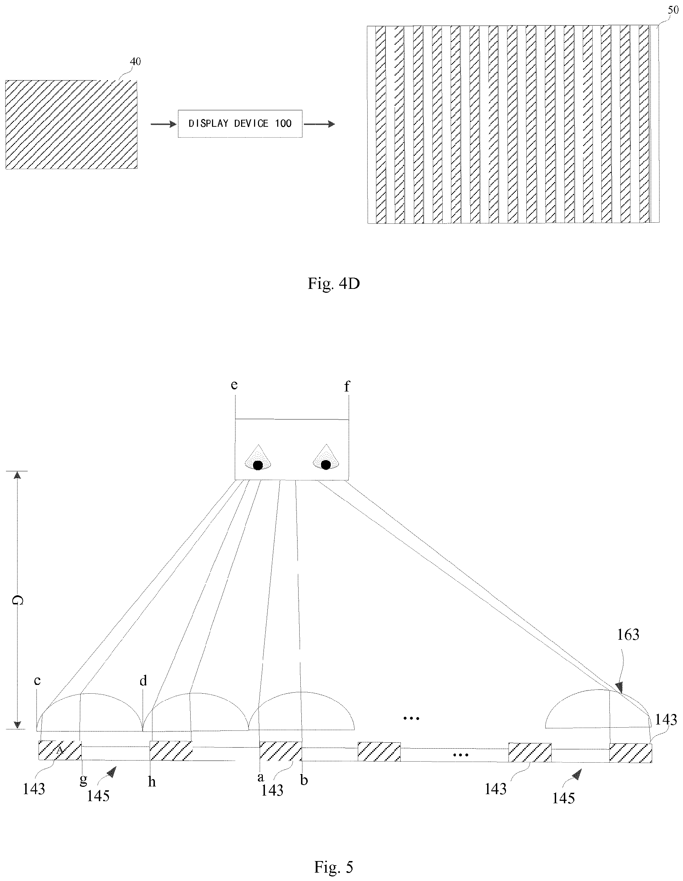

The respective display contents displayed on each of the display areas 143 are emitted to a predetermined visible range after being refracted by the corresponding lens 163. That is, in order to be displayed on the display device 100, an image frame 40 may be divided into a plurality of display contents to be displayed, and the front view of the final displayed frame 50 is schematically illustrated in Fig. 4D.

Continuing to refer to Fig. 5, the left side of Fig. 5 is assumed to be a first direction, and the right side of Fig. 5 is assumed to be a second direction. Each of the display areas 143 has an edge *a* in the first direction and an edge *b* in the second direction. Each of the idle areas 145 has an edge *g* in the first direction and an edge *h* in the second direction. At least one display area 143 and one idle area 145 are correspondingly positioned below each of the lenses 163. Here, each of the lenses 163 has an edge *c* in the first direction and an edge *d* in the second direction. The predetermined visible range has an edge e in the first direction and an edge *f* in the second direction.

For each of the display areas 143, the edges thereof meet the following conditions: the display contents at the edge *a* of the display area 143 are emitted to the range between the edges *e* and *f* through the lens 163 having the edges *c* and *d,* and the display contents at the edge *b* of the display area 143 are emitted to the range between the edges *e* and *f* through the lens 163 having the edges *c* and *d,* thereby ensuring that the display contents in each of the display areas 143 are fully visible only in the predetermined visible range. It should be noted that the outmost display areas 143 may have different configurations from that of Fig. 5. For example, the outmost display areas 143 may be replaced with idle areas.

Further, since the predetermined visible range is an area visible for the eyes of the user, the width of the predetermined visible range may be determined based on the distance between the human eyes. Generally, the width between the edges *e* and *f* may be slightly larger than the distance between the human eyes. That is, the predetermined visible range is a range determined based on the distance between the human eyes.

In an embodiment, the position of the display area 143 on the display panel 144 is fixed, and the refractive index of each of the lenses 163 is fixed. That is, the predetermined visible range is fixed.

In this case, the display driver 142 is configured to determine the positions of the display areas 143 arranged in parallel and spaced at intervals on the display panel 144 based on prc-storcd position information; divide the image frame to obtain the respective display contents corresponding to each of the display areas 143; and drive each of the display areas 143 to display the respective display contents based on the positions.

In another embodiment, the position of the human eyes is variable and the distance G between the human eyes and the lens film 162 is variable, so that the predetermined visible range is variable.

In this case, the controller 120 is further configured to send a position determining instruction to the display driver 142.

The display driver 142 is configured to determine the positions of the display areas 143 arranged in parallel and spaced at intervals on the display panel 144 based on the position determining instruction; divide the image frame to obtain the respective display contents corresponding to each of the display areas 143; and drive each of the display areas 143 to display the respective display contents based on the positions. Here, the position determining instruction is configured to indicate the position of each of the display areas 143.

Optionally, the controller 120 determines the position of each of the display areas 143 on the display panel based on the position and the refractive index of each of the lenses 163. The position of each of the lenses 163 includes the width of each of the lenses 163 and the relative position with respect to each other.

Optionally, when the position of the human eyes varies, the controller 120 dynamically determines the position of each of the display areas 143 in accordance with the conditions illustrated in Fig. 5 based on the distance e-f between the human eyes, the coordinates of the human eyes projecting on the lens film 162, the distance G between the human eyes and the lens film 162, and the position and the refractive index of each of the lenses 163.

The present embodiment does not limit how the controller 120 obtains the distance e-f between the human eyes, the coordinates of the human eyes projecting on the lens film 162, and the distance G between the human eyes and the lens film 162. The controller 120 may obtain these parameters by a device such as a front camcra, a distance sensor.

Accordingly from the above, the display device provided in the present embodiment includes the controller configured to send an image frame to the display driver; and the display driver configured to drive the display panel to display the image frame on a plurality of display areas arranged in parallel and spaced at intervals, each of the display areas being configured to display a respective part of display contents of the image frame, wherein the respective display contents displayed on each of the display areas are emitted to a predetermined visible range after being refracted by a corresponding lens. In this way, it may solve the problem in the related art that when the display screen displays with a wide visible angle, it is probably that other persons around the user may catch sight of the contents on the display screen, resulting in privacy leakage for the user, and may achieve the effect that the visible range of the display panel is limited within a predetermined visible range and a person in an area outside the predetermined visible range cannot see or cannot clearly see the image frame on the display panel.

Hereinafter, method embodiments of the present disclosure are described and can be implemented in the device embodiments of the present disclosure. Details not disclosed in the method embodiments of the present disclosure can refer to the device embodiments of the present disclosure.

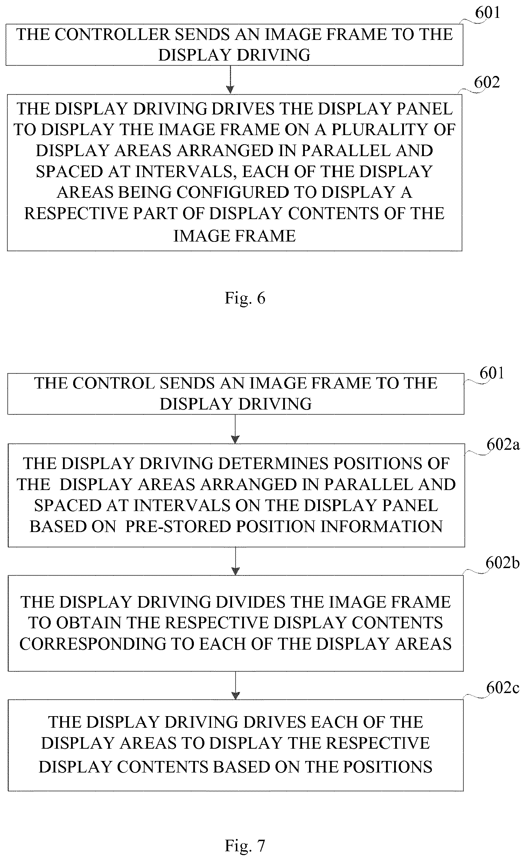

Fig. 6 is a flow chart illustrating a display method according to an exemplary embodiment. The method is applied to a display device in the embodiment illustrated in Fig. 1. The display device includes: a controller, a display driver connected to the controller, a display panel connected to the display driver, and a lens film disposed over the display panel. The lens film includes a plurality of lenses arranged in parallel, each of the lenses having a respective refractive index.

The method may include the following steps.

In step 601, the controller sends an image frame to the display driver.

Since a displayed stream usually includes a sequence of separate image frames, the step 601 may be periodically performed for multiple times, or will be performed when the image frame changes.

In step 602, the display driver drives the display panel to display the image frame on a plurality of display areas arranged in parallel and spaced at intervals, each of the display areas being configured to display a respective part of display contents of the image frame.

Here, the respective display contents displayed on each of the display areas are emitted to a predetermined visible range after being refracted by a corresponding lens.

Accordingly from the above, the display device provided in the present embodiment includes the controller configured to send an image frame to the display driver; and the display driver configured to drive the display panel to display the image frame on a plurality of display areas arranged in parallel and spaced at intervals, each of the display areas being configured to display a respective part of display contents of the image frame, wherein the respective display contents displayed on each of the display areas are emitted to a predetermined visible range after being refracted by a corresponding lens. In this way, it may solve the problem in the related art that when the display screen is operating in a wide visible angle, it is probably that other persons around the user may catch sight of the contents of the display screen, resulting in privacy leakage for the user, and it may achieve the effect that the visible range of the display panel is limited within a predetermined visible range and a person in an area outside the predetermined visible range cannot see or cannot clearly see the image frame on the display panel.

In an optional embodiment provided on the basis of the embodiment shown in Fig. 6, the step 602 may be alternatively implemented as a step 602a, a step 602b and a step 602c, as shown in Fig. 7.

In the step 602a, the display driver determines the positions of the display areas arranged in parallel and spaced at intervals on the display panel based on pre-stored position information.

In the step 602b, the display driver divides the image frame to obtain the respective display contents corresponding to each of the display areas.

In the step 602c, the display driver drives each of the display areas to display the respective display contents based on the positions.

Accordingly from the above, the display device provided in the present embodiment includes a display driver configured to determine the positions of the display areas arranged in parallel and spaced at intervals on the display panel based on pre-stored position information; divide the image frame to obtain the respective display contents corresponding to each of the display areas; and drive each of the display areas to display the respective display contents based on the positions. Since the position information is preset, when the predetermined visible range is fixed, the display driver may determine the position of each of the display areas directly based on the position information, thereby simplifying the operation of the display device.

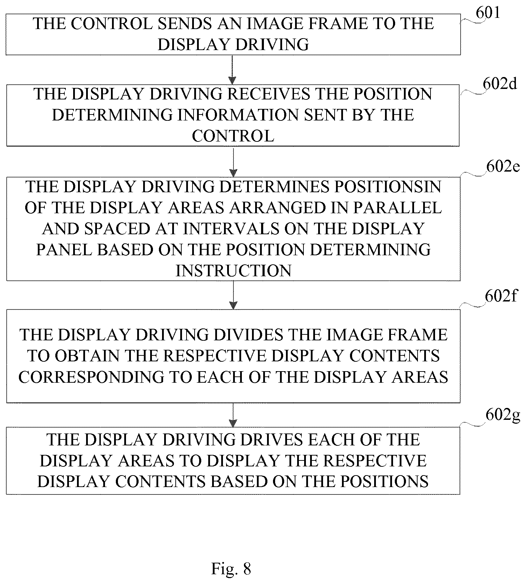

In another optional embodiment provided on the basis of the embodiment shown in Fig. 6, the controller determines the position of each of the display areas on the display panel based on the position and the refractive index of each of the lenses, and sends a position determining instruction to the display driver, the position determining instruction being configured to indicate the position of each of the display areas. Accordingly, the step 602 may be alternatively implemented as a step 602d, a step 602e, a step 602f and a step 602g, as shown in Fig. 8.

In the step 602d, the display driver receives the position determining information sent by the controller.

In the step 602e, the display driver determines the positions of the display areas arranged in parallel and spaced at intervals on the display panel based on the position determining instruction.

In the step 602f, the display driver divides the image frame to obtain the respective display contents corresponding to each of the display areas.

In the step 602g, the display driver drives each of the display areas to display the respective display contents based on the positions.

Here, the respective display contents displayed on each of the display areas are emitted to a predetermined visible range after being refracted by a corresponding lens. Optionally, the predetermined visible range is a range determined based on the distance between the human eyes.

It should be noted that the lens film is detachably affixed onto an upper layer of the display panel. For illustration purpose, if the lens film is affixed onto the upper layer of the display panel, the visible range of the display panel may be limited within a predetermined visible range, such that a person in an area outside the predetermined visible range cannot see or cannot clearly see the image frame on the display panel; and if the lens film is detached from the upper layer of the display panel, the visible range of the display panel is switched to a normal visible range, such that the light corresponding to the display panel is emitted straightly.

Since the lens film is detachable, the display device 100 accordingly has two operating modes: a wide visible angle operating mode and a narrow visible angle operating mode. The display device 100 can be switched between the above-mentioned two operating modes. When the lens film is affixed onto the upper layer of the display panel, the operating state is switched from the wide visible angle operating state to the narrow visible angle operating state; and when the lens film is detached from the upper layer of the display panel, the operating state is switched from the narrow visible angle operating state to the wide visible angle operating state.

It also should be noted that when the operating state is in the narrow visible angle operating state, the display driver drives an idle area between any two adjacent display areas on the display panel to be in a non-operating state or drives an idle area between any two adjacent display areas on the display panel to display predetermined pseudo display contents. Here, the pseudo display contents are emitted to an area outside the predetermined visible range after being refracted by a corresponding lens.

Accordingly from the above, the display device provided in the present embodiment includes the display driver configured to determine the positions of the display areas arranged in parallel and spaced at intervals on the display panel based on the position determining instruction; divide the image frame to obtain the respective display contents corresponding to each of the display areas; and drive each of the display areas to display the respective display contents based on the positions. The position determining instruction is used by the controller to determine the position of each of the display areas on the display panel based on the position and the refractive index of each of the lenses and is sent to the display driver, such that when the predetermined visible range is variable, the display driver can dynamically determine the position of each of the display areas based on the position determining instruction, thereby achieving the effect that each of the display areas can accurately display the respective display contents.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A display device, comprising:
a controller (120),
a display driver (142) connected to the controller (120),
a display panel (144) connected to the display driver (142), and
a lens film (162) disposed over the display panel (144),
wherein the lens film (162) comprises a plurality of lenses (163) arranged in parallel, the bottom surface of each of the lenses (21) is a flat surface and the top surface thereof is a semi-cylindrical surface, each of the lenses (163) having a respective refractive index;
wherein the controller is configured to dynamically divide, as the position of the eyes of a user changes, the display panel (144) into a plurality of display areas (143) and idle areas (145) arranged in parallel, wherein an idle area is arranged between any two adjacent display areas (143), at least one display area (143) and one idle area (145) are correspondingly positioned below each of the lenses (163); wherein the controller (120) is further configured
- to send an image frame to the display driver (142);
- to obtain a distance between the eyes of said user, the coordinates of where the eyes project on the lens film (162), the distance (G) between the eyes and the lens film (162) as an indication of the position of the eyes of said user, and when the position of the eyes changes,
- to dynamically determine the position of each of the display areas (143) on the display panel (144) based on the distance between the eyes, the coordinates of the eyes projecting on the lens film (162), the distance (G) between the eyes and the lens film (162), and the position and the refractive index of each of the lenses (163); and
- to send a position determining instruction to the display driver (142), wherein the position determining instruction is configured to indicate the position of each of the display areas; and
the display driver (142) is configured:
- to determine positions of the display areas arranged on the display panel (144) based on the position determining instruction;
- to divide the image frame to obtain the respective display contents corresponding to each of the display areas; and
- to drive each of the display areas to display the respective display contents based on the positions,
so that the image frame is only displayed by the display areas and not displayed by the idle areas; and
that the respective display contents displayed on each of the display areas are emitted to a predetermined visible range after being refracted by a corresponding lens (163), the predetermined visible range being a range visible for the eyes of said user.

2. The display device of claim 1, wherein
the display driver (142) is further configured to drive an idle area between any two adjacent display areas on the display panel (144) to be in a non-operating state.

3. The display device of claim 1, wherein
the display driver (142) is further configured to drive an idle area between any two adjacent display areas on the display panel (144) to display predetermined pseudo display contents, and
the pseudo display contents are emitted to an area outside the predetermined visible range after being refracted by a corresponding lens at a predetermined refractive index.

4. The display device of any one of claims 1 to 3, wherein
the lens film (162) is detachably affixed onto an upper layer of the display panel (144).

5. A display method of operating the display device of claim 1, the display method comprising:
- sending (601) an image frame to the display driver by the controller;
- obtaining, by the controller, a distance between the eyes of a user, the coordinates of the eyes projecting on the lens film (162), the distance (G) between the eyes and the lens film (162) as an indication of the position of the eyes of said user, and when the position of the eyes changes,
- dynamically determining the position of each of the display areas (143) on the display panel (144) based on the distance between the eyes, the coordinates of where the eyes project on the lens film (162), the distance (G) between the eyes and the lens film (162), and the position and the refractive index of each of the lenses (163); and
- sending, by the controller, a position determining instruction to the display driver (142), wherein the position determining instruction is configured to indicate the position of each of the display areas; and
- determining, by the display driver, positions of the display areas on the display panel (144) based on the position determining instruction;
- dividing, by the display driver, the image frame to obtain the respective display contents corresponding to each of the display areas; and
- driving, by the display driver, each of the display areas to display the respective display contents based on the positions so that the image frame is only displayed by the display areas and not displayed by the idle areas, and
that the respective display contents displayed on each of the display areas are emitted to a predetermined visible range after being refracted by a corresponding lens, the predetermined visible range being a range visible for the eyes of said user.

## Patentansprüche

1. Displayvorrichtung, die folgendes aufweist:
einen Controller (120),
einen Displaytreiber (142), der mit dem Controller (120) verbunden ist,
eine Displaytafel (144), die mit dem Displaytreiber (142) verbunden ist, und
eine Linsenfolie (162), die über der Displaytafel (144) angeordnet ist,
wobei der Linsenfilm (162) eine Vielzahl von parallel angeordneten Linsen (163) aufweist, wobei die untere Oberfläche jeder der Linsen (21) eine flache Oberfläche und die obere Oberfläche davon eine halbzylindrische Oberfläche ist, wobei jede der Linsen (163) einen entsprechenden Brechungsindex aufweist;
wobei der Controller konfiguriert ist, um, wenn sich die Position der Augen eines Benutzers ändert, dynamisch die Displaytafel (144) in eine Vielzahl von Displaybereichen und Freibereichen (145) zu unterteilen, die parallel angeordnet sind,
wobei ein Freibereich zwischen zwei angrenzenden Displaybereichen (143) angeordnet ist, wobei zumindest ein Displaybereich (143) und ein Freibereich (145) entsprechend unterhalb jeder der Linsen (163) angeordnet sind; wobei der Controller (120) ferner konfiguriert ist,
- um einen Bildrahmen an den Displaytreiber zu senden (142);
- um einen Abstand zwischen den Augen des Benutzers, die Koordinaten einer Projektion der Augen auf den Linsenfilm (162), den Abstand (G) zwischen den Augen und dem Linsenfilm (162) als eine Angabe der Position der Augen des Benutzers zu erhalten,
und wenn sich die Position der Augen verändert,
- um die Position jedes der Displaybereiche (143) auf der Displaytafel (144) dynamisch zu bestimmen, basierend auf dem Abstand zwischen den Augen, den Koordinaten einer Projektion der Augen auf den Linsenfilm (162), dem Abstand (G) zwischen den Augen und dem Linsenfilm (162) und der Position und dem Brechungsindex j eder der Linsen (163); und
- um eine Positionsbestimmungsinstruktion an den Displaytreiber (142) zu senden, wobei die Positionsbestimmungsinstruktion so konfiguriert ist, dass sie die Position jedes der Displaybereiche anzeigt; und
der Displaytreiber (142) konfiguriert ist:
- um Positionen der auf dem Displayfeld (144) angeordneten Displaybereiche auf der Grundlage der Positionsbestimmungsinstruktion zu bestimmen;
- den Bildrahmen zu unterteilen, um die jeweiligen Displayinhalte zu erhalten, die jedem der Displaybereiche entsprechen; und
- um jeden der Displaybereiche so zu steuern, dass die jeweiligen Displayinhalte auf der Grundlage der Positionen angezeigt werden,
so dass der Bildrahmen nur von den Displaybereichen und nicht von den inaktiven Bereichen angezeigt wird; und
dass der jeweilige Displayinhalt, der auf jedem der Displaybereiche angezeigt wird, in einen vorbestimmten sichtbaren Bereich emittiert wird, nachdem er durch eine entsprechende Linse (163) gebrochen wurde, wobei der vorbestimmte sichtbare Bereich ein für die Augen des Benutzers sichtbarer Bereich ist.

2. Displayvorrichtung nach Anspruch 1, wobei
der Displaytreiber (142) ferner so konfiguriert ist, dass er einen Leerbereich zwischen zwei beliebigen benachbarten Displaybereichen auf der Displaytafel (144) so steuert, dass er sich in einem Nicht-Betriebszustand befindet.

3. Die Displayvorrichtung nach Anspruch 1, wobei
der Displaytreiber (142) ferner so konfiguriert ist, dass er einen Leerlaufbereich zwischen zwei beliebigen benachbarten Displaybereichen auf dem Displayfeld (144) steuert, um vorbestimmte Pseudodisplayinhalte anzuzeigen, und
der Pseudo-Displayinhalt in einen Bereich außerhalb des vorbestimmten sichtbaren Bereichs emittiert wird, nachdem er von einer entsprechenden Linse bei einem vorbestimmten Brechungsindex gebrochen wurde.

4. Die Displayvorrichtung nach einem der Ansprüche 1 bis 3, wobei der Linsenfilm (162) auf einer oberen Schicht der Displaytafel (144) abnehmbar befestigt ist.

5. Anzeigeverfahren zum Betreiben der Displayvorrichtung nach Anspruch 1, wobei das Anzeigeverfahren folgendes umfasst:
- Senden (601) eines Bildrahmens an den Displaytreiber durch den Controller;
- Erhalten, durch den Controller, eines Abstands zwischen den Augen eines Benutzers, der Koordinaten einer Projektion der Augen auf den Linsenfilm (162), des Abstands (G) zwischen den Augen und dem Linsenfilm (162) als eine Angabe der Position der Augen des Benutzers, und
wenn sich die Position der Augen verändert,
- dynamisches Bestimmen der Position jedes der Displaybereiche (143) auf der Anzeigetafel (144) auf der Grundlage des Abstands zwischen den Augen, der Koordinaten einer Projektion der Augen auf den Linsenfilm (162), des Abstands (G) zwischen den Augen und dem Linsenfilm (162) sowie der Position und des Brechungsindex j eder der Linsen (163); und
- Senden einer Positionsbestimmungsanweisung durch den Controller an den Displaytreiber (142), wobei die Positionsbestimmungsanweisung so konfiguriert ist, dass sie die Position jedes der Displaybereiche anzeigt; und
- Bestimmung der Positionen der Displaybereiche auf der Displaytafel (144) durch den Displaytreiber auf der Grundlage der Positionsbestimmungsanweisung;
- Teilen des Bildrahmens durch den Displaytreiber, um die jeweiligen Displayinhalte zu erhalten, die jedem der Displaybereiche entsprechen; und
- Ansteuerung jedes der Displaybereiche durch den Bildschirmtreiber, um den jeweiligen Bildschirminhalt auf der Grundlage der Positionen anzuzeigen, so dass der Bildrahmen nur von den Displaybereichen und nicht von den inaktiven Bereichen angezeigt wird, und
dass die jeweiligen Displayinhalte, die auf jedem der Displaybereiche angezeigt werden, in einen vorbestimmten sichtbaren Bereich emittiert werden, nachdem sie durch eine entsprechende Linse gebrochen wurden, wobei der vorbestimmte sichtbare Bereich für die Augen des Benutzers sichtbar ist.

## Revendications

1. Un dispositif d'affichage comprenant:
un contrôleur (120),
un pilote d'affichage (142) connecté au contrôleur (120),
un panneau d'affichage (144) connecté au pilote d'affichage (142), et
un film d'objectif (162) disposé au-dessus du panneau d'affichage (144),
dans lequel ledit film de lentilles (162) comprend une pluralité de lentilles (163) disposées en parallèle, la surface inférieure de chacune desdites lentilles (21) étant une surface plane et la surface supérieure de celle-ci étant une surface semi-cylindrique, chacune desdites lentilles (163) ayant un indice de réfraction correspondant ;
dans lequel le contrôleur est configuré pour diviser dynamiquement, lorsque la position des yeux d'un utilisateur change, le panneau d'affichage (144) en une pluralité de zones d'affichage et de zones libres (145) disposées en parallèle, une zone libre étant située entre deux zones d'affichage adjacentes (143), au moins une zone d'affichage (143) et une zone libre (145) étant situées respectivement sous chacune des lentilles (163) ; dans lequel le contrôleur (120) est en outre configuré,
- pour envoyer un cadre photo au pilote d'affichage (142);
- pour obtenir une distance entre les yeux de l'utilisateur, les coordonnées d'une projection des yeux sur le film de l'objectif (162), la distance (G) entre les yeux et le film de l'objectif (162) comme indication de la position des yeux de l'utilisateur,
et lorsque la position des yeux change,
- pour déterminer dynamiquement la position de chacune des zones d'affichage (143) sur le panneau d'affichage (144) en fonction de la distance entre les yeux, des coordonnées d'une projection des yeux sur le film de la lentille (162), de la distance (G) entre les yeux et le film de la lentille (162), et de la position et de l'indice de réfraction de chacune des lentilles (163)
- pour envoyer une instruction de détermination de position au conducteur de l'écran (142), l'instruction de détermination de position étant configurée pour indiquer la position de chacune des zones d'affichage; et
le pilote d'affichage (142) est configuré:
- pour déterminer les positions des zones d'affichage disposées sur le panneau d'affichage (144) en fonction de l'instruction de détermination de la position;
- pour diviser le cadre de l'image pour obtenir les contenus d'affichage respectifs correspondant à chacune des zones d'affichage
- pour contrôler chacune des zones d'affichage afin que les contenus respectifs soient affichés en fonction des positions,
afin que le cadre de l'image ne soit affiché que par les zones d'affichage et non par les zones inactives
en ce que le contenu de l'affichage respectif affiché sur chacune des zones d'affichage est émis dans une plage visible prédéterminée après avoir été réfracté par une lentille correspondante (163), la plage visible prédéterminée étant une plage visible pour les yeux de l'utilisateur.

2. Le dispositif d'affichage selon la revendication 1, dans lequel le pilote d'affichage (142) est en outre configuré pour contrôler une zone vierge entre deux zones d'affichage adjacentes sur l'écran d'affichage (144) pour qu'elle soit dans un état de non fonctionnement.

3. Le dispositif d'affichage selon la revendication 1, dans lequel le pilote d'affichage (142) est en outre configuré pour contrôler une zone de repos entre deux zones d'affichage adjacentes quelconques sur le panneau d'affichage (144) afin d'afficher des pseudo contenus d'affichage prédéterminés; et
le contenu du pseudo-affichage est émis dans une région située en dehors de la plage visible prédéterminée après avoir été réfracté par une lentille correspondante à un indice de réfraction prédéterminé.

4. Le dispositif d'affichage selon l'une quelconque des revendications 1 à 3, dans lequel
le film de l'objectif (162) est monté de manière amovible sur une couche supérieure de l'écran d'affichage (144).

5. Un procédé d'affichage pour faire fonctionner le dispositif d'affichage selon la revendication 1, ledite procédé d'affichage comprenant :
- envoyer (601) un cadre photo au conducteur de l'écran par le contrôleur;
- obtenir, par le contrôleur, une distance entre les yeux d'un utilisateur, des coordonnées d'une projection des yeux sur le film de l'objectif (162), de la distance (G) entre les yeux et le film de l'objectif (162) comme indication de la position des yeux de l'utilisateur, et
lorsque la position des yeux change,
- déterminer dynamiquement la position de chacune des zones d'affichage (143) sur le panneau d'affichage (144) en fonction de la distance entre les yeux, des coordonnées d'une projection des yeux sur la pellicule de l'objectif (162), de la distance (G) entre les yeux et la pellicule de l'objectif (162), et de la position et de l'indice de réfraction de chacune des lentilles (163) ; et
- envoyer une instruction de détermination de position par le contrôleur au conducteur de l'écran (142), dans lequel l'instruction de détermination de position est configurée pour indiquer la position de chacune des zones d'affichage ; et
- déterminer des positions des zones d'affichage sur l'écran (144) par le conducteur de l'écran sur la base de l'instruction de détermination de la position ;
- diviser le cadre de l'image par le pilote d'affichage pour obtenir les contenus d'affichage respectifs correspondant à chacune des zones d'affichage
- commander chacune des zones d'affichage par le conducteur de l'écran pour afficher le contenu respectif de l'écran en fonction des positions, de sorte que le cadre de l'image ne soit affiché que par les zones d'affichage et non par les zones inactives, et en ce que les contenus respectifs affichés sur chacune desdites zones d'affichage sont émis dans une plage visible prédéterminée après avoir été réfractés par une lentille correspondante, ladite plage visible prédéterminée étant visible aux yeux de l'utilisateur.
